# EUROPÄISCHE PATENTSCHRIFT

(11) **EP 2 558 764 B1**
(45) Veröffentlichungstag und Bekanntmachung des Hinweises auf die Patenterteilung: **01.06.2016**
(21) Anmeldenummer: 11714941.9
(22) Anmeldetag: 11.04.2011
(51) Int. Cl.: F16L 47/16, F16L 13/14

(54) **HAUSINSTALLATIONSROHRSYSTEM SOWIE DESSEN VERWENDUNG**
DOMESTIC SERVICE PIPE SYSTEM AND USE THEREOF
SYSTÈME DE TUYAUX POUR INSTALLATION INTÉRIEURE ET SON UTILISATION

(30) Priorität: 14.04.2010 DE 102010015022
(43) Veröffentlichungstag der Anmeldung: 20.02.2013
(73) Patentinhaber: Rehau AG + Co, 95111 Rehau (DE)
(72) Erfinder: RÖDER, Bernd, 91058 Erlangen (DE)
(86) Internationale Anmeldenummer: PCT/EP2011/001784
(87) Internationale Veröffentlichungsnummer: WO 2011/128051

(56) Entgegenhaltungen:
- EP-A1- 0 501 404
- DE-U1-202008 008 554
- US-A- 3 596 933
- US-A- 5 716 077

## Beschreibung

Die vorliegende Erfindung betrifft ein Hausinstallationsrohrsystem und dessen Verwendung.

Derartige Hausinstallationsrohrsysteme sind im Stand der Technik bekannt, beispielsweise aus der DE 20 2008 008 554 U1, der EP 0 501 404 A1 der US 5 716 077 und der US 3,596,933. Dabei wird am Markt eine Vielzahl von Installationsrohrsystemen mit unterschiedlichen Materialkonstellationen der die Systeme aufbauenden Komponenten vertrieben, wobei für die unterschiedlichen Installationssysteme verschiedene Verbindungstechniken zum Einsatz kommen. So haben sich am Markt rein metallische Systeme mit Rohren und Formteilen aus metallischen Werkstoffen wie Edelstahl und Messing sowie Kunststoffrohrsysteme und Verbundrohrsysteme am Markt etabliert. Rein metallische Systeme sind mechanisch belastbar, aber sehr starr und ihre Montage ist daher schwierig. Insbesondere Kunststoffrohrsysteme und Verbundrohrsysteme zeichnen sich durch eine hohe Flexibilität des Rohrsystems sowie durch eine schnell zu montierende und robuste Verbindungstechnik aus, wobei sich insbesondere Radialpressen, Schieben, Schrauben und teilweise Stecken als Verbindungstechniken durchgesetzt haben. Dadurch kommt Installationsrohrsystemen mit Kunststoffrohren oder Verbundrohren eine hohe Montagefreundlichkeit insbesondere bei der Etageninstallation zu.

Im Bereich von Kunststoff- und Verbundrohrsystemen kommen bislang als Werkstoffe für Formteile Kupferlegierungen wie Messing und Rotguss sowie temperaturbeständige Kunststoffe wie Polyphenylsulfon (PPSU) und PVDF (Polyvinylidenfluorid) zum Einsatz. Aufgrund der hohen, mechanischen Belastungen werden Gewindeformteile bislang überwiegend aus Kupferwerkstoffen gefertigt. Daneben kommen bei Gewindeformteilen und gewindelosen Formteilen wie Fittingen auch Lösungen aus Kunststoffmaterialien, die sich am Markt bislang jedoch noch nicht durchsetzen konnten, zum Einsatz. Darüber hinaus bieten Gewindeformteile aus Kunststoffmaterialien bislang keine ausreichende mechanische Stabilität, während die Anforderungen an das Migrationsverhalten der Kupferlegierungen hinsichtlich der Abgabe von Metallionen wie Bleiionen, Eisenionen und Kupferionen steigen. Darüber hinaus besitzen derartige Kupferlegierungen eine Neigung zur Korrosion.

Damit besteht die Aufgabe der vorliegenden Erfindung darin, ein Hausinstallationsrohrsystem zur Verfügung zu stellen, das die Nachteile des Stands der Technik überwindet. Insbesondere soll das erfindungsgemäße Hausinstallationsrohrsystem eine hohe Flexibilität bei schnell zu installierender und robuster Verbindungstechnik besitzen und eine hohe Montagefreundlichkeit aufweisen. Darüber hinaus soll das erfindungsgemäße Hausinstallationsrohrsystem hochgradig korrosionsbeständig sein und nur in sehr geringen Mengen Metallionen vor allem bei kritischen Wasserbedingungen (d.h. weiches Grundwasser, enthärtetes Wasser, niedrige pH-Werte und hohe Alkalimetallsalzgehalte, insbesondere Chloride, Sulfate und Nitrate) abgeben.

Diese und andere Aufgaben werden durch ein Hausinstallationsrohrsystem mit den Merkmalen des Anspruchs 1 bzw. durch die Verwendung des erfindungsgemäßen Hausinstallationsrohrsystems gemäß Anspruch 5 gelöst. Bevorzugte Ausführungsformen des erfindungsgemäßen Hausinstallationsrohrsystems sind in den abhängigen Ansprüchen beschrieben.

Gemäß der vorliegenden Erfindung wurde erkannt, dass das vorteilhafte Migrationsverhalten von Kunststoffmaterialien und Edelstahl für ein derartiges Hausinstallationsrohrsystem genutzt werden kann, wenn gewindelose Formteile und Gewindeformteile aus temperaturbeständigem Kunststoff und/oder Edelstahl hergestellt werden. Darüber hinaus wurde erfindungsgemäß erkannt, dass Gewindeformteile aus Edelstahl den bei derartigen Gewindeformteilen auftretenden hohen mechanischen Belastungen standhalten können. Darüber hinaus bieten gewindelöse Formteile und Gewindeformteile aus den genannten Materialien bei Verlegung eines Vollkunststoffrohrsystems, eines Kunststoff-Verbundrohrsystems und/oder eines Metall-Kunststoff-Verbundrohrsystems oder Kombinationen der vorgenannten Rohrsysteme als Leitungsrohre eine hohe Flexibilität, wobei auch die für die Leitungsrohre verwendeten Komponenten naturgemäß ein gutes Migrations- und Korrosionsverhalten zeigen.

Dementsprechend liegt die vorliegende Erfindung in der Bereitstellung eines Hausinstallationssystems, das Vollkunststoffrohre, Kunststoff-Verbundrohre und/oder Metall-Kunststoff-Verbundrohre als Leitungsrohre; gewindelose Formteile aus temperaturbeständigem Kunststoff und/oder Edelstahl; und Gewindeformteile aus Edelstahl umfasst.

Darüber hinaus liegt die vorliegende Erfindung in der Verwendung eines derartigen Hausinstallationsrohrsystems als Leitungs- und Anschlusssystem in der Trinkwasserinstallation, in einer Sprinkleranlage, in Heizkörperanbindungen, in einer Betonkerntemperierung sowie in einem Flächenheizungs- und/oder Flächenkühlungssystem.

Der Begriff "temperaturbeständige Kunststoffe", wie er hierin verwendet wird, bezieht sich auf die Wärmeformbeständigkeit und Thermostabilität dieser Werkstoffgruppe und bezeichnet Polymermaterialien, insbesondere thermoplastische Polymermaterialien, mit einer Wärmeformbeständigkeit bei Temperaturen von mindestens von 150°C. Die Obergrenze der Temperatur, bei der ein derartiger temperaturbeständiger Kunststoff einsetzbar ist, ist vom verwendeten Material abhängig, wobei die Einsetzbarkeit derartiger Polymermaterialien bei maximal 260°C endet.

In der vorliegenden Anmeldung beschreibt der Begriff "Edelstahl" Stähle gemäß DIN EN 10027. Dabei sind V2A- und V4A-Stähle, insbesondere diejenigen mit den Werkstoffnummern 1.4301 (X5CrNi18-10), 1.4401 (XSCrNiMo17-12-2), 1.4404 (X2CrNiMo17-12-2) und 1.4571 (X6CrNiMoTi17-12-2) gemäß DIN EN 10027-2, bevorzugt, wobei der Edelstahl mit der 1.4401 (X5CrNiMo17-12-2) besonders bevorzugt ist.

Wie er hierin verwendet wird, bezeichnet der Begriff "gewindelose Formteile" Fittings innerhalb des Hausinstallationsrohrsystems, die kein Gewinde aufweisen. Dies beinhaltet insbesondere Anschlussstücke, Anschlusswinkel, Mehrfachverteiler, T-Stücke, Wand-T-Stücke, Wandwinkel, Systemübergänge, Übergangsstücke, gewinkelte Übergangsstücke, die jeweils kein Gewinde aufweisen. Analog dazu bezeichnet der Begriff "Gewindeformteile" Fittings innerhalb des Hausinstallationsrohrsystems, die ein Gewinde aufweisen. Dies beinhaltet insbesondere Anschlussstücke, Anschlusswinkel, Mehrfachverteiler, T-Stücke, Wand-T-Stücke, Wandwinkel, Systemübergänge, Übergangsstücke, gewinkelte Übergangsstücke, die jeweils mindestens ein Innen- und oder Außengewinde aufweisen.

Gemäß der vorliegenden Erfindung kommen als Leitungsrohre Vollkunststoffrohre, bevorzugt aus Polyethylen (PE, insbesondere PE 100 und PE-RT), vernetztem Polyethylen (PE-X, insbesondere PE-Xa und PE-Xb), Polypropylen (insbesondere statistischem Polypropylen PP-R) und Polybutylen (PB); Kunststoff-Verbundrohre, bevorzugt mit Schichten aus Polyethylen (PE, insbesondere PE 100 und PE-RT), vernetztem Polyethylen (PE-X, insbesondere PE-Xa und PE-Xb), Polypropylen (insbesondere statistischem Polypropylen PP-R) und/oder Polybutylen (PB); und Metall-Kunststoff-Verbundrohre (MKV-Rohre), bevorzugt mit Schichten aus Polyethylen (PE, insbesondere PE 100 und PE-RT), vernetztem Polyethylen (PE-X, insbesondere PE-Xa und PE-Xb), Polypropylen (insbesondere statistischem Polypropylen PP-R) und/oder Polybutylen (PB) und mindestens einer Schicht aus Metallen, vorzugsweise Aluminium, zum Einsatz. Bei Kunststoff-Verbundrohren und MKV-Rohren können zwischen einzelnen Schichten Haftvermittlerschichten eingebracht sein. Gemäß der vorliegenden Erfindung können alle Leitungsrohre identisch aufgebaut sein oder eines oder mehrere der Leitungsrohre können unterschiedlich aufgebaut sein. Darüber hinaus können die Leitungsrohre gemäß der vorliegenden Erfindung auch faserverstärkt sein. Die Faserverstärkung der Leitungsrohre kann in einzelnen oder in allen Leitungsrohren, über die gesamte Rohrlänge oder auch nur in Abschnitten, vorhanden sein.

In bevorzugten Ausführungsformen der vorliegenden Erfindung werden als Formteile Gewindeformteile aus Edelstahl und gewindelose Formteile nur aus temperaturbeständigem Kunststoff eingesetzt. Dadurch werden die Materialkosten für das erfindungsgemäße Hausinstallationsrohrsystem reduziert.

In anderen bevorzugten Ausführungsformen der vorliegenden Erfindung können auch Gewindeformteile aus temperaturbeständigem Kunststoff hergestellt sein, wobei diese Gewindeformteile aus temperaturbeständigem Kunststoff im Gewindebereich mindestens einen Gewindeeinsatz aus Edelstahl im Falle von Innengewinden und/oder mindestens einen Gewindeaufsatz aus Edelstahl im Falle von Außengewinden aufweisen.

Beim erfindungsgemäßen Hausinstallationsrohrsystem ist der Anschluss der Leitungsrohre an die gewindelosen Formteile und die Gewindeformteile als Pressverbindung mit Schiebehülse ausgebildete. Diese Art der Verbindungstechnik hat sich in der Praxis für Vollkunststoffrohre, Kunststoff-Verbundrohre und/oder Metall-Kunststoff-Verbundrohre als besonders geeignet herausgestellt.

Dabei kann es sich als besonders günstig erweisen, wenn die Schiebehülsen aus temperaturbeständigem Kunststoff hergestellt sind. Schiebehülsen aus temperaturbeständigem Kunststoff sind gegenüber solchen aus metallischen Werkstoffen mit geringerer Verpresskraft in Pressverbindungen mit Schiebehülse einsetzbar, was die Montage des Hausinstallationsrohrsystems erleichtert. Darüber hinaus wird durch eine derartige Schiebehülse aus temperaturbeständigem Kunststoff beim Verpressen eine geringere Verformung im Kragen des zugehörigen Fittings bewirkt, was die Sicherheit der Verbindungstechnik steigert. Dabei haben sich für die Verwendung als temperaturbeständige Kunststoffe gemäß der vorliegenden Erfindung insbesondere Polyphenylsulfon (PPSU), Polyvinylidenfluorid (PVDF), Polyethersulfon (PES), Polyphenylensulfid (PPS) und Polyestercarbonat (PESC) sowie Copolymeren und Blends dieser Polymere als geeignete Kunststoffmaterialien erwiesen. Dabei ist als Kunststoffmaterial für die Schiebehülsen PVDF und für die gewindelosen Formteile PPSU bevorzugt.

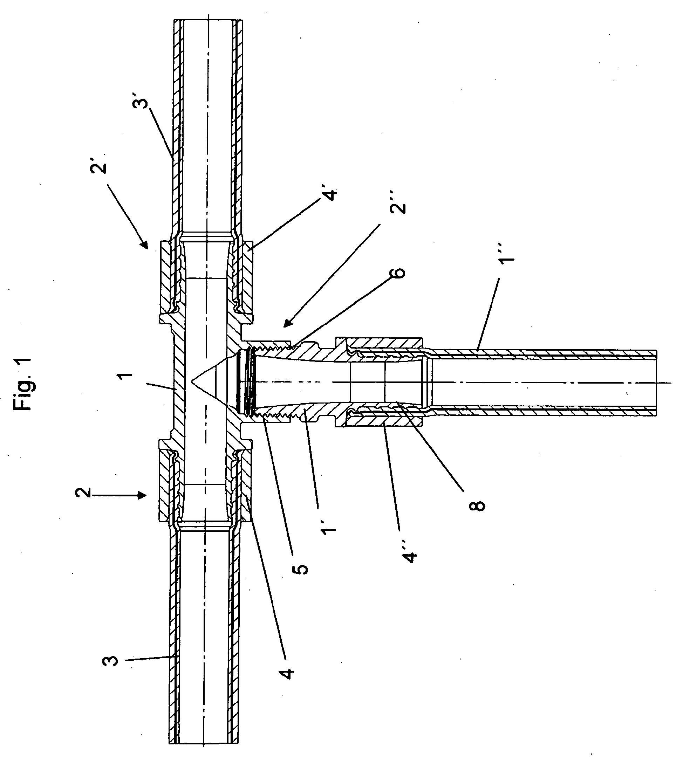

Im Folgenden soll die vorliegende Erfindung unter Bezugnahme auf die in den Figuren dargestellte Ausführungsform im Detail erläutert werden. Dabei zeigt Fig. 1 eine Querschnittsdarstellung eines T-Stücks mit einem Gewindeanschluss, der in einer Ausführungsform des erfindungsgemäßen Hausinstallationsrohrsystems zum Einsatz kommen kann.

In Fig. 1 ist ein Querschnitt eines Verbindungsbereichs in einem erfindungsgemäßen Hausinstallationsrohrsystem dargestellt. Das darin gezeigte Gewindeformteil 1 ist T-förmig ausgebildet und weist drei Anschlussbereiche 2, 2' und 2" auf, wobei an den Anschlussbereichen 2 und 2' Leitungsrohre 3, 3' mithilfe von Pressverbindungen mit Schiebehülsen 4, 4' an dem Gewindeformteil 1 fixiert sind. Im dritten Anschlussbereich 2" besitzt das Gewindeformteil 1 ein Innengewinde 5, in das ein Außengewinde 6 eines weiteren Gewindeformteils 1' eingeschraubt ist. Zur Abdichtung ist ein Teflonband 7 oder alternativ eine Gewindedichtschnur in die Gewindeverbindung eingebracht.

An der dem Außengewinde 6 abgewandten Seite weist das Gewindeformteil 1' einen Anschluss 8 auf, der über eine Pressverbindung mit Schiebehülse 4" mit dem Leitungsrohr 3" verbunden ist.

Die Gewindeformteile 1, 1' sowie weitere Gewindeformteile des erfindungsgemäßen Hausinstallationsrohrsystems sind aus Edelstahl, vorzugsweise aus V2A- und V4A-Stählen, hergestellt, wobei die Edelstähle mit den Werkstoffnummern 1.4301, 1.4401, 1.4404 und 1.4571 gemäß DIN EN 10027-2 besonders bevorzugt sind. Gewindefreie Formteile, die in dem erfindungsgemäßen Hausinstallationsrohrsystem zum Einsatz kommen, sind aus temperaturbeständigem Kunststoff und/oder Edelstahl gefertigt. Erfindungsgemäß sind dabei als temperaturbeständige Kunststoffe Polyphenylsulfon, Polyvinylidenfluorid, Polyethersulfon, Polyphenylensulfid und Polyestercarbonat sowie Copolymeren und Blends dieser Polymere bevorzugt. Als Edelstahl für die gewindefreien Formteile werden bevorzugt diejenigen verwendet, die auch bei den Gewindeformteilen zum Einsatz kommen. Die Schiebehülsen sind aus ebenfalls aus temperaturbeständigem Kunststoff hergestellt, wobei vorzugsweise die in Bezug auf die gewindelosen Formteile beschriebenen Materialien zum Einsatz kommen. Dabei ist als temperaturbeständiges Kunststoffmaterial für die Schiebehülsen PVDF und für die gewindelosen Formteile PPSU bevorzugt.

Die Leitungsrohre 3, 3', 3" sind in der in Fig. 1 ausschnittsweise gezeigten Ausführungsform des erfindungsgemäßen Hausinstallationsrohrsystems Metall-Kunststoff-Verbundrohre (MKV-Rohre), wobei die dem Lumen der Rohre 3, 3', 3" zugewandte Schicht eine Schicht aus vernetztem Polyethylen (PE-X, insbesondere PE-Xa oder PE-Xb) ist, an die sich eine Aluminiumschicht und wiederum eine Schicht aus vernetztem Polyethylen anschließen. Zur Verbesserung der Haftung des PE-X an der Aluminiumschicht kann auf der dem Lumen zugewandten und/oder abgewandten Seite der Aluminiumschicht zumindest abschnittsweise eine Haftvermittlerschicht aufgetragen sein. Ebenso kann auch mindestens eine der PE-X-Schichten durch eine Schicht aus einem anderen Polymermaterial wie Polyethylen (PE, insbesondere PE 100 und PE-RT), Polypropylen (insbesondere statistischem Polypropylen PP-R) und/oder Polybutylen (PB) ersetzt sein und/oder das MKV-Rohr kann weitere Schichten aus diesen Polymermaterialien umfassen.

In anderen Ausführungsformen der vorliegenden Erfindung sind die Rohre 3, 3', 3" Vollkunststoffrohre, bevorzugt aus Polyethylen (PE, insbesondere PE 100 und PE-RT), vernetztem Polyethylen (PE-X, insbesondere PE-Xa und PE-Xb), Polypropylen (insbesondere statistischem Polypropylen PP-R) und Polybutylen (PB).

Alternativ dazu können Kunststoff-Verbundrohre, bevorzugt mit Schichten aus Polyethylen (PE, insbesondere PE 100 und PE-RT), vernetztem Polyethylen (PE-X, insbesondere PE-Xa und PE-Xb), Polypropylen (insbesondere statistischem Polypropylen PP-R) und/oder Polybutylen (PB) als Leitungsrohre 3, 3', 3" in dem erfindungsgemäßen Hausinstallationsrohrsystem verwendet werden. Gemäß der vorliegenden Erfindung sind alle Leitungsrohre 3, 3', 3" identisch aufgebaut oder die Leitungsrohre 3, 3', 3" können unterschiedlich aufgebaut sein.

Das erfindungsgemäße Hausinstallationsrohrsystems bietet bei einfacher und flexibler Montage ein vorteilhaftes Migrations- und Korrosionsverhalten und kommt insbesondere als Leitungs- und Anschlusssystem in der Trinkwasserinstallation, in Sprinkleranlagen, in Heizkörperanbindungen, in Betonkerntemperierungen sowie in Flächenheizungs- und/oder Flächenkühlungssystemen zum Einsatz.

## Patentansprüche

1. Hausinstallationsrohrsystem, das die folgenden Komponenten umfasst:
- Vollkunststoffrohre, Kunststoff-Verbundrohre und/oder Metall-Kunststoff-Verbundrohre als Leitungsrohre (3, 3', 3");
- gewindelose Formteile aus temperaturbeständigem Kunststoff und/oder Edelstahl; und
- Gewindeformteile (1, 1'),
wobei
der Anschluss der Leitungsrohre (3, 3', 3") an die gewindelosen Formteile und die Gewindeformteile (1,1') als Pressverbindung mit Schiebehülse (4, 4', 4") ausgebitdet ist,
**dadurch gekennzeichnet, dass** die Gewindeformteile (1,1') aus Edelstahl bestehen.

2. Hausinstallationsrohrsystem nach Anspruch 1, **dadurch gekennzeichnet, dass** es gewindelose Formteile nur aus temperaturbeständigem Kunststoff umfasst.

3. Hausinstallationsrohrsystem nach Anspruch 1, **dadurch gekennzeichnet, dass** die Schiebehülsen (4, 4', 4") aus temperaturbeständigem Kunststoff hergestellt sind.

4. Hausinstallationsrohrsystem nach einem der Ansprüche 1 bis 3, **dadurch gekennzeichnet, dass** der temperaturbeständige Kunststoff aus der Gruppe, bestehend aus Polyphenylsulfon, Polyvinylidenfluorid, Polyethersulfon, Polyphenylensulfid und Polyestercarbonat sowie Copolymeren und Blends dieser Polymere, ausgewählt ist.

5. Verwendung eines Hausinstallationsrohrsystems nach einem der Ansprüche 1 bis 4 als Leitüngs- und Anschlusssystem in der Trinkwasserinstallation, in einer Sprinkleranlage, in Heizkörperanbindungen, in einer Betonkerntemperierung sowie in einem Flächenheizungs- und/oder Flächenkühlungssystem.

## Claims

1. Domestic service pipe system, which comprises the following components:
- solid plastic pipes, composite plastic pipes and/or composite metal/plastic pipes as line pipes (3, 3', 3");
- threadless shaped parts of temperature-resistant plastic and/or stainless steel; and
- threaded shaped parts (1, 1'),
wherein
the connection of the line pipes (3, 3', 3") to the threadless shaped parts and the threaded shaped parts (1, 1') is formed as a press-fit connection with a sliding sleeve (4, 4', 4"), **characterized in that** the threaded shaped parts (1, 1') consist of stainless steel.

2. Domestic service pipe system according to Claim 1, **characterized in that** it comprises threadless shaped parts made only of temperature-resistant plastic.

3. Domestic service pipe system according to Claim 1, **characterized in that** the sliding sleeves (4, 4', 4") are produced from temperature-resistant plastic.

4. Domestic service pipe system according to one of Claims 1 to 3, **characterized in that** the temperature-resistant plastic is selected from the group consisting of polyphenyl sulphone, polyvinylidene fluoride, polyether sulphone, polyphenylene sulphide and polyester carbonate as well as copolymers and blends of these polymers.

5. Use of a domestic service pipe system according to one of Claims 1 to 4 as a line and connection system in the drinking water installation, in a sprinkler system, in heater connections, in a concrete core temperature control system and in a panel heating and/or panel cooling system.

## Revendications

1. Système de tuyaux pour installation intérieure, qui comprend les composants suivants:
- des tuyaux en plastique massif, des tuyaux composites en plastique et/ou des tuyaux composites en métal/plastique comme tuyaux de conduite (3, 3', 3");
- des pièces moulées non filetées en plastique résistant à la température et/ou en acier allié; et
- des pièces moulées filetées (1, 1'),
dans lequel le raccordement des tuyaux de conduite (3, 3', 3") aux pièces moulées non filetées et aux pièces moulées filetées (1, 1') est réalisé par assemblage à ajustement serré avec manchon coulissant (4, 4', 4"), **caractérisé en ce que** les pièces moulées filetées (1, 1') sont constituées d'acier allié.

2. Système de tuyaux pour installation intérieure selon la revendication 1, **caractérisé en ce qu'**il comprend des pièces moulées non filetées uniquement en plastique résistant à la température.

3. Système de tuyaux pour installation intérieure selon la revendication 1, **caractérisé en ce que** les manchons coulissants (4, 4', 4") sont fabriqués en plastique résistant à la température.

4. Système de tuyaux pour installation intérieure selon l'une quelconque des revendications 1 à 3, **caractérisé en ce que** le plastique résistant à la température est choisi dans le groupe composé du polyphénylsulfone, du fluorure de polyvinylidène, du polyéthersulfone, du sulfure de polyphénylène et du carbonate de polyester, ainsi que de copolymères et de mélanges de ces polymères.

5. Utilisation d'un système de tuyaux pour installation intérieure selon l'une quelconque des revendications 1 à 4 comme système de conduite et de raccordement dans une installation d'eau potable, dans une installation de gicleurs d'incendie, dans des raccordements de corps chauffants, dans un système d'égalisation de la température de noyau en béton ainsi que dans un système de chauffage et/ou de refroidissement de surface.
